# NOUVEAU FASCICULE DE BREVET EUROPEEN

(11) **EP 0 252 833 B2**
(45) Date de publication et mention de la décision concernant l'opposition: **30.06.1993**
(45) Mention de la délivrance du brevet: 31.10.1990
(21) Numéro de dépôt: 87401579.5
(22) Date de dépôt: 06.07.1987
(51) Int. Cl.: F16B 21/08

(54) **Dispositif d'encliquetage à blocage amélioré**
Schnappvorrichtung mit verbesserter Sperre
Snap-device with improved locking

(30) Priorité: 11.07.1986 FR 8610180
(43) Date de publication de la demande: 13.01.1988
(73) Titulaire: SOCIETE ELECTRONIQUE DE LA REGION PAYS DE LOIRE, F-75020 Paris (FR)
(72) Inventeur: Huerre, Dominique, F-75008 Paris (FR); Brehin, Roger, F-75008 Paris (FR)
(74) Mandataire: Chaverneff, Vladimir

(56) Documents cités:
- AT-A- 266 646
- FR-A- 2 193 942
- FR-A- 2 292 886
- FR-A- 2 560 627
- GB-A- 2 128 669

## Description

La présente invention se rapporte à un dispositif d'encliquetage à blocage amélioré.

Les dispositifs d'encliquetage du type à patte élastiquement flexible se terminant par un ergot ont souvent tendance à se désenclipsersous l'effet d'une force dirigée en sens contraire de celle ayant provoqué l'encliquetage, cette force parasite tendant à faire tourner l'ergot dans le sens du désencliquetage.

On connaît d'après les documents GB-A-2 128 669 et FR-A-2 193 942 des dispositifs d'encliquetage, mais le dispositif du premier document ne permet pas d'encliquetage précis et celui du second document ne comporte pas de moyens évitant le désencliquetage.

On connaît d'après le document AT-A-266 646 un dispositif de blocage de fenêtres (figures 6 et 7) à profilé en forme d'ergot, dont le point de contact avec la fenêtre est disposé de telle façon que l'ergot a tendance à se désencliqueter lorsque la fenêtre est soumise à une force de sens contraire à celle ayant provoqué l'encliquetage.

La présente invention a pour objet un dispositif d'encliquetage du type précité ne risquant pratiquement pas de se désencliqueter sous i'effetd'une force dirigée en sens contraire à celle ayant provoqué l'encliquetage.

Le dispositif d'encliquetage conforme à l'invention est du type à patte élastiquement flexible se terminant par un ergot, la patte comporte une première partie rectiligne se raccordant à son support, une deuxième partie rectiligne perpendiculaire à la première et s'étendant dans le sens dans lequel le dispositif fléchit it lors de l'encliquetage et du désencliquetage, et une troisième partie rectiligne perpendiculaire à la deuxième partie et se terminant par l'ergot, et est caractérisé par le fait que le centre de la face de l'ergot contre laquelle est appliqué le coin de la pièce à immobiliser est placé entre l'axe de la première partie et la troisième partie.

La présente invention sera mieux comprise à la lecture de la description détaillée d'un mode de réalisation, prise à titre d'exemple non limitatif et illustré par le dessin annexé, sur lequel :
- la figure 1 est une vue de côté d'un dispositif d'encliquetage de l'art antérieur ;
- la figure 2 est une vue de côté d'un dispositif d'encliquetage conforme à l'invention ;
- la figure 3 est une vue en perspective d'un dispositif d'encliquetage double comportant le dispositif de la figure 2, et indiquant la position finale d'un tournevis de désencliquetage ;
- la figure 4 est une vue de côté du dispositif de la figure 3 au repos, et
- les figures 5 et 6 sont des vues de dessus montrant les étapes de début et de fin de désencliquetage volontaire.

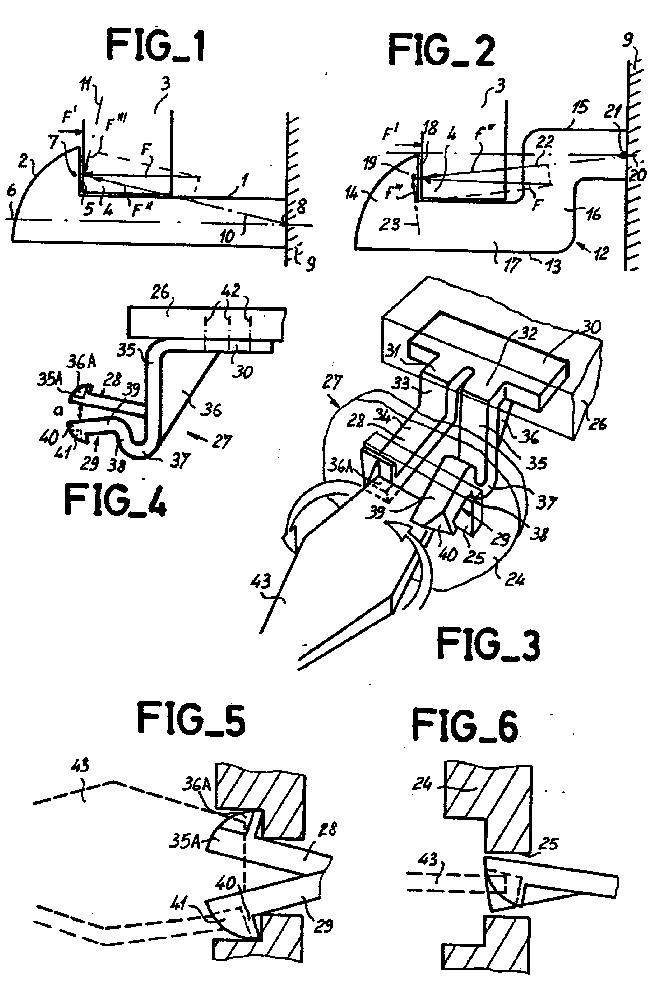

On a représenté sur la figure 1 un dispositif classique d'encliquetage dans lequel une patte flexible 1 se terminant par un ergot 2 coopère avec une pièce 3 à immobiliser. Un coin 4 de la pièce 3, présentant un angle droit, est en prise avec la face interne 5 de l'ergot 2 perpendiculaire à l'axe 6 de la patte 1. On suppose que la pièce 3 exerce sur la face 5 de l'ergot 2 une force F dirigée en sens contraire de la force F' ayant produit précédemment l'encliquetage (les forces F et F' étant sensiblement parallèles à l'axe 6).

On désigne par la référence 7 le centre de la face 5 sur lequel s'exerce la résultante de la force F, et par la référence 8 un point de la patte 1, situé sur l'axe 6, au niveau de la jonction de la patte 1 avec son support 9 supposé fixe. En première approximation, on peut considérer le point 8 comme celui par lequel passe l'axe de flexion de la patte 1 lorsqu'elle est sollicitée à l'encliquetage ou au désencliquetage. On considère les projections du vecteur F (vecteur représentant la force F) dans un système d'axes rectangulaires ayant pour origine le point 7, dans le plan du dessin. Ce système comporte un axe 10 passant par les points 7 et 8 et un axe 11 qui lui est perpendiculaire (et passant au point 7). Ces projections sont respectivement les vecteurs F" (sur l'axe 10) et F"' est dirigé presque perpendiculairement à l'axe 6, vers ce dernier. Par conséquent, la composante F"' tend à désencliqueter l'ergot 2 de la pièce 3.

Le dispositif d'encliquetage 12, représenté sur la figure 2 ne présente pas l'inconvénient de celui représenté en figure 1. Le dispositif 12 comporte une patte 13 se terminant par un ergot 14, et qui n'est plus rectiligne, mais contre-coudée dans le sens dans lequel elle fléchissait lors de l'encliquetage : cette patte comporte une première partie postérieure rectiligne 15 se raccordant au support 9, une deuxième partie intermédiaire rectiligne 16 perpendiculaire à la première et s'étendant à l'opposé de la pièce 3, et une troisième partie centrale rectiligne 17, perpendiculaire à la partie 16, s'étendant dans le même sens que cette dernière et se terminant par un ergot 14 qui s'en- cliquète avec le coin 4 de la pièce 3 de la même façon que l'ergot 2 de la figure 1. Bien entendu, la longueur de la partie 17 de la patte 13 est au moins légèrement supérieure à l'épaisseur de la pièce 3 dans la zone d'enliquetage. La face de l'ergot contre laquelle est appliqué le coin 4 de la pièce 4 est désignée par la référence 18, et son centre par la référence 19. L'axe, dans le plan du dessin, de la partie 15 de la patte 13 est référencé 20. On désigne par 21 un point situé sur l'axe 20, au niveau de la jonction entre la patte 12 et son support 9. Ce point 21 peut être considéré, au moins approximativement, comme celui par lequel passe l'axe de flexion de la patte 12.

Soient, comme dans le cas de la figure 1, F' et F respectivement la force exercée sur la pièce 3 pour l'encliqueter avec la patte 13, et la force parasite exercée sur la pièce 3 en sens contraire de la première. On désigne respectivement par les références 22 un axe passant par les points 19 et 21, 23 un axe perpendiculaire à l'axe 22 et passant par le point 19, f' et f"' les projections de F sur les axes 22 et 23. La composante de force f est sensiblement parallèle à l'axe 20, et peut être négligée en ce qui concerne son action sur la patte 13 (tout au moins tant qu'elle n'est pas suffisamment importante pour la déformer en élongation). Par contre, la composante de force t'est dirigée sensiblement perpendiculairement à l'axe 20, vers cet axe, c'est-à-dire qu'elle tend à renforcer l'encliquetage en sollicitant en particulier la partie 17 de la patte 13 vers la pièce 3.

On a représenté sur les figures 3 et4 un dispositif d'encliquetage double, qui peut être avantageusement utilisé pour fixer de façon amovible une plaque contre un support, par exemple un cache arrière de téléviseur sur le coffret de ce téléviseur.

La plaque 24 à fixer est percée d'une ouverture rectangulaire 25. Cette plaque est fixée, grâce à plusieurs dispositifs d'encliquetage tels que le dispositif 27 représenté sur les figures 3 à 6, contre un coffret 26. Le dispositif 27 comporte deux pattes 28, 29 s'étendant côte à côte et dont le support est constitué par une plaquette rectangulaire 30 formée intégralement avec ces pattes, dans le prolongement de leurs parties postérieures 31, 32 respectivement. La patte 28 est similaire à la patte 13 de la figure 2, les parties postérieures 31, intermédiaire 33 et centrale 34 de la patte 28 étant respectivement semblables aux parties 15, 16 et 17 de la patte 13. L'ergot 35A de la patte 28 comporte une encoche 36A en forme de coin pratiquée sur sa face arrondie, s'étendant sur environ la moitié de la largeur de l'ergot, du côté de la patte 29. La partie postérieure 32 de la patte 29, de même largeur que la partie 31, se raccorde à une partie intermédiaire 35 qui lui est perpendiculaire, la partie 35 étant plus longue que la partie 33 de la patte 8, les parties 33 et 35 s'étendant dans le même sens. La partie 35 de la patte 29 est rigidifiée sur toute sa longueur par une nervure 36 prenant appui sur la plaquette 30 et formée intégralement avec ces parties 30 et 35. La patte 29 comporte, à la suite de la partie 35, une courte partie 37 qui lui est sensiblement perpendiculaire, une partie 38, parallèle à la partie 35, et une partie 39, perpendiculaire à la partie 38 et se terminant par un ergot 40. L'ergot 40 comporte, dans sa face arrondie, une encoche 41, semblable à l'encoche 36 et pratiquée du côte de la patte 28. De préférence, les pattes 28 et 29 sont de largeur constante sur toute leur longueur. La partie 35 de la patte 29 étant rigidifiée par la nervure 36, on peut considérer que l'axe de flexion de cette patte se situe au niveau de la jonction entre les parties 35 et 37, et que les parties 37, 38 et 39 de la patte 29 sont respectivement similaires aux parties 15, 16, 17 de la patte 13 de la figure 1.

La partie 33 de la patte 28 est légèrement plus courte que la différence entre les longueurs des parties 35 et 38 de la patte 29. De façon avantageuse, ainsi que représenté sur la figure 4, les parties 34 et 39 font entre elles un angle a d'environ 8 à 10°. Selon une variante, non représentée, les parties 34 et 39 sont parallèles entre elles.

L'ouverture 25 de la plaque 24 est rectangulaire, et, bien entendu, son grand côté est parallèle au plan de la plaquette 30 lorsque la plaque 24 est fixée par le dispositif 27. Les dimensions de l'ouverture 25 sont, bien entendu, adaptées aux dimensions des pattes 28 et 29, et en particulier sa hauteur est telle que les ergots 35Aet41 puissent retenir efficacement cette plaque 24 en position encliquetée (figure 5 : les parties 34 et 39, s'appuient, à peu près au niveau de leur jonction avec les ergots 35A, 40, sur les rebords de l'ouverture 25), et telle que les ergots puissent passer par cette ouverture lors de l'encliquetage ou du désencliquetage (figure 6).

Etant donné que les ergots 35A et 40 sont dirigés en sens opposés, que l'axe de flexion de la patte 28 est sensiblement au niveau de la plaquette 30, et que l'axe de flexion de la patte 29 est sensiblement à la jonction entre les parties 35 et 37 de cette patte 29, les ergots de ces deux pattes ont tendance à s'écarter l'un de l'autre, et donc à renforcer le blocage de la plaque 24 lorsqu'une force (analogue à F des figures 1 et 2) de sens contraire à celui de la force ayant produit l'encliquetage est appliquée à la plaque 24.

Pour désencliqueter la plaque 24, on utilise un tournevis 43, ou objet analogue, dont la lame prend appui sur les encoches 36A et 41 (figure 5), et on lui fait effectuer un quart de tour environ de façon à rapprocher les ergots 35A et 40 l'un de l'autre (dans le sens contraire des aiguilles d'une montre dans le cas de la disposition des pattes 28, 29 telle que représentée sur le dessin, c'est-à-dire avec la patte 28 à gauche comme sur la figure 3). Lorsque la lame du tournevis 43 est sensiblement parallèle au grand côté de l'ouverture 25, les deux ergots sont côte à côte, et on peut les passer facilement par l'ouverture 25.

## Revendications

1. Dispositif d'encliquetage à blocage amélioré, coopérant avec une pièce (3) à immobiliser, de type à patte élastiquement flexible se terminant par un ergot (14), la patte (12) comportant une première partie rectiligne (15) se raccordant à son support (9), la patte (12) comprenant une deuxième partie rectiligne (16), perpendiculaire à la première et s'étendant dans le sens dans lequel le dispositif fléchit lors de l'encliquetage et du désencliquetage, et une troisième partie rectiligne (17), perpendiculaire à la deuxième partie et se terminant par l'ergot (14), caractérisé par le fait que le centre (19) de la face de l'ergot (18) contre laquelle est appliqué le coin (4) de la pièce à immobiliser (3) est placé entre l'axe (20) de la première partie et la troisième partie.

2. Dispositif d'enciiquetage selon la revendication 1, pour la fixation amovible d'une plaque (24) comportant une ouverture (25) pour le passage du dispositif d'encliquetage, caractérisé par le fait que ce dispositif (27) comporte deux pattes disposées côte à côte (28, 29) et dont les trois parties sont respectivement parallèles entre elles (31, 33, 34 et 37, 38, 39), et dont les secondes parties (33 et 38) sont dirigées en sens opposés, leurs ergots (35, 40) étant dirigés en sens opposés.

3. Dispositifd'encliquetage selon la revendication 2, caractérisé par le fait que les ergots des deux pattes comportent sur leurs faces arrondies deux encoches (36A, 41) sur lesquelles prend appui la lame d'un tournevis (43) ou objet similaire pour assurer le désencliquetage.

## Patentansprüche

1. Verklinkungsvorrichtung mit verbesserter Sperrung, die mit einem festzulegenden Teil (3) zusammenwirkt, von einer Bauart mit einer elastisch biegsamen und in einem Haken (14) auslaufenden Klaue (12), die einen an ihrem Träger (9) angebrachten ersten geradlinigen Teil (15) aufweist, wobei die Klaue einen zweiten geradlinigen Teil (16) aufweist, der zum ersten Teil senkrecht ist und sich in der Richtung erstreckt, in der sich die Vorrichtung beim Verklinken und beim Ausklinken biegt, und einen dritten geradlinigen Teil (17), der zum zweiten Teil senkrecht ist und in dem Haken (14) ausläuft, dadurch gekennzeichnet, daß die Mitte (19) der Fläche (18) des Hakens, gegen die die Ecke (4) des festzulegenden Teils (3) angelegt wird, zwischen der Achse (20) des ersten Teils und dem dritten Teil angeordnet ist.

2. Verklinkungsvorrichtung gemäß Anspruch 1, für die lösbare Befestigung einer Platte (24), die eine dem Durchlaß der Verklinkungsvorrichtung dienende Öffnung (25) aufweist, dadurch gekennzeichnet, daß die Vorrichtung (27) zwei Seite an Seite angeordnete Klauen (28, 29) aufweist, deren drei Teile (31, 33, 34 bzw. 37, 38, 39) zueinander parallel sind und deren zweite Teile (33 bzw. 38) in entgegengesetzten Richtungen orientiert sind, wobei ihre Haken (35,40) entgegengesetzt gerichtet sind.

3. Verklinkungsvorrichtung gemäß Anspruch 2, dadurch gekennzeichnet, daß die Haken der beiden Klauen an ihren abgerundeten Seiten Aussparungen (36A, 41) aufweisen, an denen sich die Klinge eines Schraubendrehers (43) oder ein ähnlicher Gegenstand abstützt, um das Ausklinken zu bewirken.

## Claims

1. A detent device with an improved locking action cooperating with a member (3) to be fastened, of the type having an elastically flexible bracket terminating with a lug (14), said bracket (12) comprising a first rectilinear part (15) connecting with its support (9), said bracket having a second rectilinear part (16), perpendicular to the first one and extending in the direction in which the device bends when locking and unlocking, and a third rectilinear part (17), perpendicular to the second part and terminating with the lug (14), characterized in that the center (19) of the face (18) of the lug, against which the corner (4) of the member (3) to be fastened is applied, is placed between the axis (20) of the first part and the third part.

2. The detent device as claimed in claim 1, for releasably securing a plate (24) having an aperture (25) for the passage of the detent device, characterized in that the device (27) comprises two brackets (28 and 29) placed side by side, whose three parts (31, 33, 34 and 37, 38, 39) are respectively parallel to each other, and whose second parts (33 and 38) extend in opposite directions, their lugs (35, 40) being directed oppositely.

3. The detent device as claimed in claim 2, characterized in that the lugs of the two brackets comprise notches (36A, 41) in their rounded faces, on which notches there bears the tip of a screw driver (43) or a similar means in order to perform unlocking.
